# EUROPEAN PATENT SPECIFICATION

(11) **EP 2 056 195 B1**
(45) Date of publication and mention of the grant of the patent: **29.05.2013**
(21) Application number: 06840790.7
(22) Date of filing: 30.12.2006
(51) Int. Cl.: H04L 12/24, G06F 9/445, H04W 8/24

(54) **IMPLEMENTATION METHOD FOR UPDATING THE TERMINALS IN BATCHES**
IMPLEMENTIERUNGSVERFAHREN ZUM AKTUALISIEREN DER ENDGERÄTE IN BATCHES
PROCÉDÉ DE MISE À JOUR DE TERMINAUX PAR LOTS

(30) Priority: 23.08.2006 CN 200610112576
(43) Date of publication of application: 06.05.2009
(73) Proprietor: ZTE Corporation, Shenzhen, Guangdong 518057 (CN)
(72) Inventor: GENG, Guoqing, Guangdong 518057 (CN); WANG, Yalai, Guangdong 518057 (CN); YOU, Hongtao, Guangdong 518057 (CN); ZHANG, Yuan, Guangdong 518057 (CN)
(74) Representative: Hatzmann, Martin
(86) International application number: PCT/CN2006/003760
(87) International publication number: WO 2008/028364

(56) References cited:
- CN-A- 1 622 518
- CN-A- 1 747 402
- CN-A- 1 758 607
- US-A1- 2004 054 764
- US-A1- 2006 041 881

## Description

### TECHNICAL FIELD

The present invention relates to a method for updating centralized or distributed file of a terminal, and more particularly, relates to an automatic method for updating software and configuration of CPE (customer Premise Equipment) equipment (such as set top box) and intelligent terminal equipment at the user side.

### BACKGROUND OF THE INVENTION

With the constant progress of science and technology and the continuous development of the technology in information industries, people could enjoy more and more convenient services and high-quality life brought by the high-tech. Particularly in recent years, facing the prospect of the constant updating of the telecom network and multimedia technology and the application of the video technology and streaming media technology, the kinds of the terminal equipment providing these new services are becoming more and more with stronger functions and higher intelligentized level increasingly. The terminals with multimedia functions are stepping into numerous households in various forms and becoming indispensable telecom products in people's work, life and entertainment.

The functions and forms of the terminals are various, such as IPTV (Internet Protocol Television) set top box equipment, intelligent mobile telephone terminal, Bluetooth video IP (Internet Protocol) phone and home gateway. The customers could watch high-quality TV programs, order programs, play on-line interactive games, karaoke show and surf on internet through the IPTV set top box equipment, which expands the TV functions in a traditional sense and universalizes the recreational functions of TV. Customers could use the audio-visual communication service provided by IP phone service and enjoy voice service which could be compared with the traditional telephone with a low payment; furthermore, the videophone shortens the communication distance between people. The intelligent mobile phone, a product by combining mobile communication terminal and PC (Personal Computer), is much like a PDA (Personal Digital Assistant), through which customers could listen to MP3, download games and MTV and chat on-line using MSN and QQ. In future, customers could also enjoy various services of IPTV with the mobile phone acting as an IPTV terminal. So many terminal equipments are connected by the home gateway to be managed and controlled uniformly, and the home gateway is the hinge connecting the telecom operator to the home network of the customers. At that time, only one cable is enough to possess so many service functions. And this prospect is longed for by people.

In general, terminal equipment is neither a pure media player equipment, nor a traditional telecom terminal equipment, but a complicated and intelligentized equipment on which various services could be developed. Thus, said terminal equipment cannot be managed in a traditional way but maintained in a more intelligentized manner.

The terminal equipment is commonly characterized by a high intelligentized and high automatic degree, has an independent IP address, and the terminal equipment could connect to the public network and corresponding management. According to the requirements of functions and services, software and firmware and configuration should be updated correspondingly. For common users, the more and more intelligentized equipment configuration is becoming more and more complex, which leads to more and more complex management. Though most users only know how to use the intelligentized equipment, they are ignorant as to how to configure, optimize and update the same. In order to popularize related services, the telecom operator will not require the users to be quite familiar with the equipment but configure and manage the terminal equipment through the management system in favor of convenience of the users. Therefore, the automatic updating function of the terminal equipment becomes particularly important. The software impediments of the terminals could be eliminated by updating the software version, and updated services could be provided by the same; by updating the configuration file, the equipment could be configured automatically, related services could be activated/closed so as to realize the function customized by users and diversified services.

The terminal equipment at the user side is of multiple kinds and large in number, furthermore, since the size of the updating file may be very large, there are some technical problems in the updating scheme of the terminal equipment as follows:
a1) an updating file may be a software version, a application module or a configuration file of various kinds of equipment, and various updating files have different versions, therefore, the management terminal should implement management and maintenance uniformly to these files;
a2) the number of the user terminals may be large, thus, the server for version downloading may be incapable of meeting the requirement of large-scale concurrent downloading;
a3) the network bandwidth could not provide support to high-speed concurrent downloading of a large amount, which will slow down the downloading and updating speed of the terminal and delay user's normal use of services;
a4) how the terminal equipment determines whether updating is required, when to trigger the updating, and how to transfer the corresponding updating file parameter and protocol parameter information to the terminal;
a5) how to ensure file downloading and terminal updating security.

At present, there are several relevant methods for updating software or configuration of the terminal equipment; however, all these methods cannot solve the main problems synthetically.

In the most relevant method for automatically updating software of terminal equipment, the terminal equipment therein cooperates with the central office equipment to connect the user terminal to the network. Said method is as follow: the terminal equipment reports the version information of the current software, the terminal management unit determines whether the software of the terminal equipment requires updating; if the updating is required, an updating command is sent to the terminal equipment to make the updating software being downloaded by the terminal software to fulfill the updating.

However, said method has the following defects:
b1) the cases when the number of the terminals is large are neglected. The determination logic and control logic of updating are completely located at the terminal management unit server side; when the number of the terminals is large, the performance of the management unit would decline and could not provide downloading and dealing with updating operation logic;
b2) perfect safety security measures are not provided.

The existing method for automatically updating configuration of the next generation network terminal is also comparatively relevant. In this method, the terminal acquires the program version and configuration file information from the next generation network to determine whether updating program file and loading configuration file are required, and the terminal automatically downloads files from the file server to perform the updating and loading if the updating and loading are required. This invention is able to download the correct configuration file and program version to run normally without manual intervention so as to elevate configuration efficiency to a large extent.

However, said method has the following defects:
c1) the problem of downloading performance has not been solved when the number of the terminals is large;
c2) meanwhile, the management terminal has no management function to control updating of the terminal, and the management unit is unable to perform a compulsive updating to the terminal when it is necessary;
c3) perfect safety security measures are not provided.

In addition, the following two methods for automatically configuring and updating are comparatively relevant, wherein, the first methods for automatically configuring the network terminal comprises the following steps:
step a, pre-storing the information such as domain name of the management server, terminal equipment ID, authentication information in the terminal equipment;
step b, powering up the terminal to make the terminal automatically acquire IP address;
step c, initiating a HTTP (Hyper Text Transfer Protocol) request to the management server according to the pre-stored domain name of the management server;
step d, the terminal sends heartbeat message at a regular time to maintain the HTTP connection between the terminal and the management server after the connection is setup;
step e, performing authentication and certification by the authentication message beared on SOAP (Simple Object Access Protocol) on the same HTTP pathway;
step f, the authorized user could performing work such as automatic downloading, automatic updating of software version by when authentication is passed.

The above method could power up the network terminal equipment which could be used directly after being connected to the network.

The other method is a method for on-line updating the network terminal product. This method comprises forward direction learning process and backward direction learning process, an updating scheme adopting ping pong mechanism, and dealing with the updating operation with the manner of making MINISYSTEM and SYSTEM coexistent so as to make the terminal capable of running normally in any case, elevate anti-destruction capability of the terminal system and enhance strength of the terminal system, which further achieves the capability of no-manual-intervention updating, and even unmanned updating and realizes safe, flexible and stable ability of self-updating.

However, the two methods above still neither solve the problem in cases where the number of the terminals is large, nor provide safety security mechanism to the flow.

It is noted that patent publication US 2004/054764 A1 discloses an update system configured to provide software updates, software patches and/or other data packets to one or more computer system via a network. Patent publication US 2006/041881 A1 discloses a method of upgrading new software at a node in a wireless communication network. In patent publication CN 1758607A, a method is disclosed for updating software in a distributed service system.

### SUMMARY OF THE INVENTION

The problem that the present invention aims to solve is to provide an implementation method for updating the terminals in batches, for ensuring normal services of the terminal updating and downloading, and initiative triggering and controlling updating of the terminal and meanwhile ensuring the file downloading and updating process security by a safety security mechanism.

In order to achieve the objects above, the present invention provides an implementation method which is defined in claim 1

In the Step 2 of the implementation method for updating the terminals in batches, the management server configures the server parameter in automatic program manner or manual configuration manner.

In the Step 2 of the implementation method for updating the terminals in batches, the management server configures a version file server parameter corresponding to the respective terminal according to a corresponding relation policy between the respective terminal and the version file servers; and the corresponding relation policy is:
if the terminal updating system disposes one version file server, the respective comprises a step of after the server parameter configuration is completed, the management server triggers autonomous updating of the respective terminal by an updating trigger command, or telecom business operation support system informs the respective terminal and the management server of an trigger-updating by a generated worksheet.

The step 2 of the implementation method for updating the terminals in batches further comprises a step of determining whether the respective terminal has a graphic interface. If the respective terminal has a graphic interface, and an user receives an updating trigger command when using a terminal service, the user will be prompted by the graphic interface whether to update. When the user agrees to update, connect to the version file server to update; otherwise, do not update and return a reason of updating termination to the management server; if the respective terminal has no graphic interface, and the user receives the updating trigger command when using the terminal service, do not update and return a reason of updating termination to the management server.

The step 2 of the implementation method for updating the terminals in batches further comprises a step of after the server parameter configuration is completed, the management server updates the respective terminal compulsively by a compulsive updating command, or telecom business operation support system informs the respective terminal and the management server of an trigger-updating by a generated worksheet.

The step 2 of the implementation method for updating the terminals in batches further comprises a step of determining whether the respective terminal has a graphic interface. If the respective terminal has a graphic interface, and an user receives a compulsive updating command when using terminal service, the user will be prompted by the graphic interface whether to update. When the user agrees to update, connect to the version file server to update; otherwise, do not update and return a reason of updating termination to the management server; if the respective terminal has no graphic interface, and the user receives the compulsive updating command when using the terminal service, do not update and return a reason of updating termination to the management server.

In the steps 3 and 4 of the implementation method for updating the terminals in batches, the respective terminal will not be updated in the case of the user is using a service and cannot be interrupted; the terminal will be updated in the case of the terminal is not in use and a terminal updating will not affect a service in use.

In the steps 3 and 4 of the implementation method for updating the terminals in batches, if the respective terminal acquires version updating information by downloading and analyzing the description file, the respective terminal will download the description file according to security file transfer protocol or file transfer protocol; the description file is a security-encrypted file and the decryption key of the description file is configured by the management server when configuring the server parameter.

In the step 3 of the implementation method for updating the terminals in batches, when restarted or at a fixed time interval, the respective terminal initiatively connects to the version file server and downloads a description file when triggered by the management server.

In the step 3 of the implementation method for updating the terminals in batches further comprises a step of decrypting, checking and verifying the description file by the respective terminal if the respective terminal acquires version updating information by downloading and analyzing the description file; if the description file is successfully decrypted, checked and verified, the respective terminal will analyze contents of the description file, otherwise, the respective terminal will quit from the updating flow and connect to the management server to report failure of updating to the same.

The step 3 of the implementation method for updating the terminals in batches further comprises a step of the respective terminal determining whether updating is required, and determining the modules to be updated and parameters of path and file size of an updating file according to the version updating information and version condition corresponding to the respective terminal if the respective terminal successfully checks the description file.

Step 4 of the implementation method for updating the terminals in batches further comprises a step of decrypting, checking and verifying the description file by the respective terminal; if the description file is successfully decrypted, checked and verified, the respective terminal will be updated, and connected to the management server and report failure of updating to the same; otherwise, the respective terminal will connect to the management server and report failure of updating to the same.

In the step 4 of the implementation method for updating the terminals in batches, the terminal updating comprises a software version updating and a configuration file updating of a terminal.

In the implementation method for updating the terminals in batches, the continuous execution of a software version updating and a configuration file updating of the respective terminal are controlled by a manner of giving a management command by the management server or a manner set by a description file of the terminal.

The advantageous effects of the present invention are as follow:
(1), under the management of a management server, a terminal connects to an execution of a software version updating and a configuration file updating of the respective terminal are controlled by a manner of giving a management command by the management server or a manner set by a description file of the terminal.

Also, a computer program product and a terminal updating system are provided as defined in claim 14 and claim 15 respectively.

The advantageous effects of the present invention are as follow:
(1), under the management of a management server, a terminal connects to an specified version file server to acquire version updating information and analyzes whether an updating is required. If it is determined that the updating is required, the terminal will connect to the version file server to perform file downloading and updating so as to reduce the pressure of treatment performance of the management server.
(2), a plurality of version file servers are disposed to realize loading balance of the file downloading service so as to ensure that the file downloading treatment performance and downloading link bandwidth will not be affected by the number of the terminals.
(3), all the version files in the version file server will be updated by the management server in synchronization. The terminal could connect to the version file server when it is restarted or when a fixed time interval arrives, then, the terminal enters into the flow of downloading and updating.
(4), a management server could initiatively trigger a terminal to update automatically by a management command; and the management server also could force the terminal to download and update by a management command.
(5), the various conditions of triggering updating and the self-determined updating methods of a terminal ensure that the terminal could accomplish an updating mission with high efficiency, and meanwhile, the management server could also control updating of the terminal when it is necessary.
(6), a safety file downloading protocol is used in the file downloading flow of the terminal, which ensures that the file will not be stolen or tampered in network transfer, and that the size, integrality and version checking of the file will be checked when the file is downloaded so as to ensure file security.

The present invention will be described in detail with reference to the drawings and exemplary embodiments which should not considered to be limitation to the invention.

### DESCRIPTION OF THE DRAWINGS

### DETAILED DESCRIPTION OF EXEMPLARY EMBODIMENTS

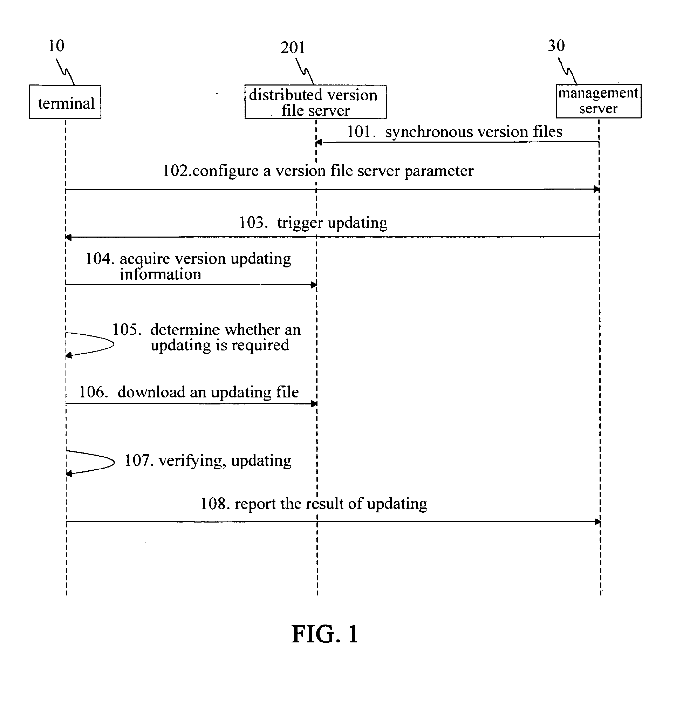

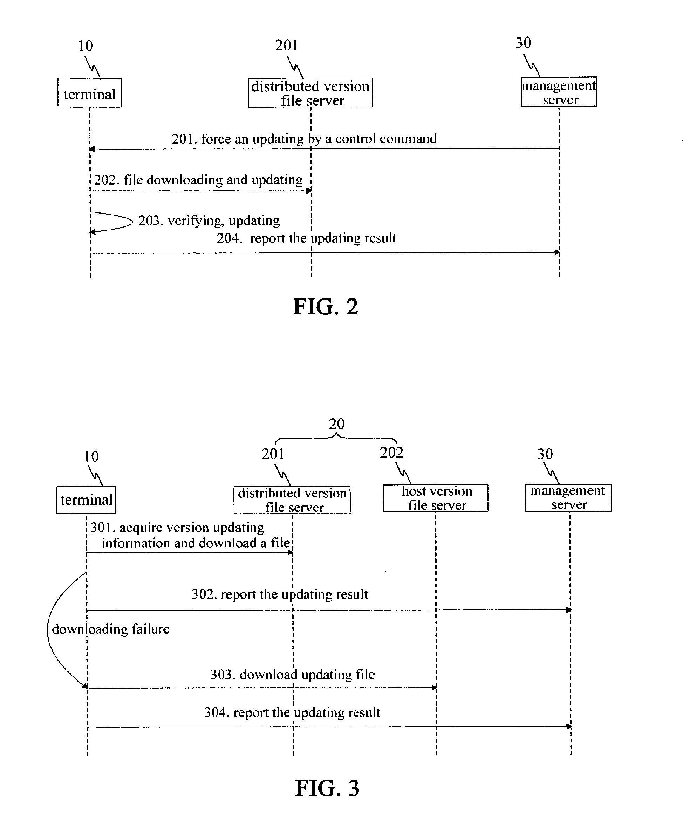

FIG 1 is a flow chart of a management server configuring a server parameter of terminal version file and the terminal automatically performing version updating in the present invention. In combination with FIGS 2 and 3, the version updating flow comprises the following steps:
Step 101, a management server **30** synchronizes the various files used in updating of a terminal **10** with a distributed version file server **201;**
   wherein, the various files used in updating include a version updating description file ("a description file" for short) and an updating file;
Step 102, the terminal **10** connects to the management server **30**, the management server **30** configures a version file server parameter corresponding to the terminal **10**;
Step 103, the management server **30** triggers the terminal **10** to update by an updating management command or gives no updating trigger;
   wherein, the updating management command is further classified into an updating trigger command and a compulsive updating command; the management server **30** makes the terminal **10** automatically update by an updating trigger command and forces the terminal **10** to update by a compulsive updating command.
Step 104, the terminal **10** connects to the distributed version file servers **201** to acquire version updating information including information of the current version and updating conditions;
   wherein, the terminal could acquire version updating information by downloading the description file and analyze contents of the description file, and also could acquire the same through corresponding management protocol.
Step 105, the terminal **10** determines whether an updating is required according to the acquired version updating information in combination with its own version condition;
Step 106, the terminal **10** connects to the distributed version file servers **201** to download the updating file;
Step 107, performing the updating after the downloaded updating file is verified by the terminal **10**; and
Step 108, the terminal **10** connects to the management server **30** to report updating result after the updating is completed.

Wherein, the distributed version file servers **201** and the management server **30** could both be called a terminal management system and compositely set on one piece of physical equipment.

In the step 101 above, the distributed version file servers **201** is disposed on the public network and maintains link connection with the respective terminal **10** in the system;
when new version files are issued, the management server **30** will synchronize all files required by the current updating with the respective distributed version file server **201;**
the management server **30** ensures that the synchronization process of the version file will not conflict with normal file downloading of the terminal **10** by a sercurity and mutual exclusion mechanism.

In the step 102 above, the management server **30** protects and maintains the corresponding relationship policy between the terminal **10** and the version file server **20**, and configures the version file server parameter corresponding to the terminal **10** according to the corresponding relationship policy. The configuration function of the management server **30** could be realized automatically by the program and also could be realized manually by a manager;
the corresponding relation policy between the terminal **10** and the version file server **20** is: if only one version file server **20** is disposed in the system, all the terminals **10** in the system are corresponding to the version file server **20**; if a plurality of version file servers **20** are disposed in the system, one therein is taken as a host version file server **202**, and the version file servers **20** corresponding to the terminals **10** will be allocated equally according to a policy (such as principles of nearby service and loading balance);
when there are a plurality of version file servers **20** in the system, the management server **30** could select one server therein as the host version file server **202** and the others as distributed version file servers **201**, meanwhile, the management server **30** will configure the distributed version file servers parameters of the terminal **10** and the host version file server parameters, such as address of the server; when the terminal **10** is failed to connect to the distributed version file servers **201**, the terminal **10** will connect to the host version file server **202** to perform file downloading and updating;
the management server **30** maintains the files on each distributed version file server **201** and keeps real-time and synchronous updating;
the distributed version file servers **201** and the host version file server **202** are both called version file server **20**.

In step 103 above, after configuring the distributed version file server parameter, the terminal **10** could be triggered to perform automatically updating by an updating trigger command of the management server **30**; the terminal **10** and the management server **30** could also be informed of trigger updating by a worksheet generated by BOSS (Business Operation Support System), and in actual operation, the trigger updating could also be directly performed by the manager of the management system.

Determine whether the terminal **10** has a graphic interface. If the terminal **10** has a graphic interface, and an user receives an updating trigger command of the management server **30** when using a terminal service, the user will be prompted by the graphic interface whether to update. When the user agrees to update, connects to the distributed version file servers **201** to update; otherwise, do not update and return a reason of updating termination to the management server **30**; if the terminal **10** has no graphic interface, and the user receives the updating trigger command of the management server **30** when using the terminal service, do not update and return a reason of updating termination to the management server **30**.

The file downloading and updating of the terminal **10** are performed in the premise that the normal use of a service of an user will not be affected. The terminal **10** will not perform the updating when the user is using a service which can not be interrupted; corresponding file downloading and updating of the terminal **10** will be performed when the terminal is not in use and an updating will not affect a service in use. The management server **30** could also give no updating trigger to the terminal **10**, but the terminal **10** will automatically perform the updating when it is not in use or the updating will not affect a service in use.

The management server **30** could backup the configuration file of the terminal **10** through a management command, and recover the current configuration of the terminal **10** when it is necessary.

In step 102 and step 103 above, the management protocol for the management server **30** managing the terminal **10** is not defined. It could be standard TR-069, SNMP network management protocol and user-defined protocol as well. Wherein, TR-069 is Technical Report 069 CPE WAN Management Protocol, and SNMP is Simple Network Management Protocol.

In step 104 above, the terminal **10** could initiatively connect to the distributed version file servers **201** to acquire version updating information when restart or at a fixed time interval.

The action of the terminal **10** acquiring version updating information could be triggered by the management server **30**.

If the terminal **10** acquires version updating information by the method of downloading a description file, the description file is the security-encrypted file, symmetrical encryption and decryption are adopted between the management server **30** and the terminal **10**, and the decryption key is configured by the management server **30** when configuring the version server parameter.

The distributed version file servers **201** only provides downloading authority to the file specified by the terminal **10** and ensure the distributed version file servers **201** security.

If the terminal **10** acquires version updating information by downloading and analyzing the description file, the terminal **10** will download the description file by a safety file downloading protocol. The downloading protocols of the description file include transfer protocols such as FTP (File Transfer Protocol), SFTP (Secure File Transfer Protocol), HTTPS (Secure Hypertext Transfer Protocol), and so on.

If the terminal **10** acquires version updating information by downloading and analyzing the description file, the terminal **10** firstly performs decrypting, checking and verifying (such as source verification, integrity verification) after the description file downloading is completed. If the description file is successfully verified, the terminal **10** will analyze the contents of the description file; otherwise, the terminal **10** will quit from the updating flow and connect to the management server to report result of failure to the same.

After the description file is successfully verified, the terminal **10** acquires the version updating information by analyzing the contents therein, and determines in combination with its own version condition whether an updating is required, and determines the module to be updated and parameters such as path parameters and file size parameters of an updating file.

When the terminal **10** determines that an updating is required, a safety file downloading protocol (such as SFTP, FTP) will be used to update the file. As to version files of a larger size, a broken-point continuingly transferring function could be used in downloading so as to avoid re-downloading caused by network interrupt and long-time downloading which will affect the user in using a terminal service function.

In the step 106 above, the terminal **10** performs decrypting, checking and verifying (such as version checking, integrity checking) to the updating file after the updating file downloading is completed by the terminal **10**. Corresponding updating will be performed after the updating file is verified.

The terminal **10**, as an user terminal, downloads a version updating file by a safty downloading protocol. The downloading protocol could be transfer protocols such as FTP/SFTP/HTTPS and so on.

In the step 107 above, the terminal **10** performs decrypting, checking and verifying (such as version checking, integrity checking) to the updating file after the updating file downloading is completed by the terminal **10**. Corresponding updating will be performed after all the updating file is verified.

When the updating operation of the terminal **10** does not affect the normal service of an user or when the terminal is not in use, the terminal **10** accepts an updating command and directly download the updating file to update.

The continuous updating flow of the terminal **10** could be controlled by a management command given by the management server **30** or a description file agreement set by the terminal **10**.

In the step 108 above, after the software of the terminal **10** has been updated, the important configuration therein (such as management server address, service server address, service user name/password, public network connection manner, user name/password connected to the public network) parameters therein are still maintained and will not be lost. It will be ensured that the operation such as connecting to the public network, the service server and the managing server and so on will still be realized after restarting of the terminal **10** is completed.

In the whole process of updating, the terminal **10** will connect to the management server **30** and report the updating result to the same after the updating process is completed without considering whether the updating is successful or not. The manager could analyze the condition of updating failure and carry out corresponding treatment.

In the updating flow in FIG 1, whether an updating of the terminal **10** is required and which software module or configuration should be updated and path parameter of an updating file are obtained by the terminal **10** automatically acquiring the updating information and analyzes the same. In this method, the logical judgment of updating is located at the terminal side, and the processing capability of the management server **30** will not be affected even the number of the terminals **10** is very larger, which reduces the processing pressure of the management server **30**.

However, the management server **30** could also directly sent a compulsive updating command with a management command to force the terminal **10** to update. The compulsive updating command includes various information/parameters of an updating file. After the compulsive updating command is received, the terminal **10** immediately connects to the specified distributed version file servers **201** or the host version file server **202** to perform downloading and updating.

Wherein, the distributed version file servers **201** and the management server **30** could both be called a terminal management system and compositely set on one piece of physical equipment.

Refer to FIG 2, which is a flow chart of a management server forcing a terminal to update in the present invention. In combination with FIGS 1 and 3, the following steps are applied in the flow:
Step **201**, the management server **30** informs the terminal **10** of updating by a compulsive updating command;
Step **202**, the terminal **10** connects to the specified distributed version file servers **201** to download an updating file after the terminal **10** receiving the compulsive updating command;
Step 203, after downloading an updating file is completed, the terminal **10** performs decrypting, checking and verifying to the updating file, and performs updating when the updating file is verified; and
Step 204, after the updating is completed, the terminal **10** connects to the management server **30** to report updating result to the same.

In the step **201** above, the compulsive updating command includes updating server parameter information (such as server address, port, connected user name/password), version file parameters (such as version file path, version file size);
before informing the terminal **10** of an updating, the management server **30** could backup the configuration file of the terminal **10** by a management command, and recover the configuration file of the terminal **10** when it is necessary;
the compulsive terminal updating flow could be informed by a worksheet generated by BOSS system to the management server **30** to perform compulsive updating, and in the actual operation, the updating could be performed directly by the manager of the management system as well.

In the step **202** above, in the process of the terminal connecting to the distributed version file servers **201** and downloading, if the downloading could not be completed due to occurrence of abnormality, the terminal **10** will quit from the updating flow and report the reason of corresponding abnormality to the management server **30**;

Determine whether the terminal **10** has a graphic interface. If the terminal **10** has a graphic interface, and an user receives a compulsive updating command of the management server **30** when using a terminal service, the user will be prompted by the graphic interface whether to update. When the user agrees to update, connect to the distributed version file servers **201** to update; otherwise, do not update and return a reason of updating termination to the management server **30**; if the terminal **10** has no graphic interface, and an user receives a compulsive updating command of the management server **30** when using a terminal service, do not update and return a reason of updating termination to the management server **30.**

In the step 203 above, verify performed to the updating file by the terminal **10** includes at least file size verify, file integrity verify and version verify to ensure that the updating file has not been tampered, and that the version of the updating file is correct.

One host version file server **202** is disposed as a backup version file server in the environment having a plurality of version file servers **20**. When the terminal **10** could not connect to the distributed version file servers **201** to download the file and perform update, the terminal **10** could connect to the host version file server **202** to update. In the case that the management server **30** forces the terminal **10** to update by a compulsive updating command, the terminal **10** uses the version file server parameters provided in the compulsive updating command to update, and even if the updating is failed, the terminal **10** will not connect to the host version file server 202 to retry updating.

The plurality of version file servers **20** only provide the downloading authority to files specified by the terminal **10** to ensure the distributed version file servers **201** and the host version file server **202** security.

Wherein, the host version file server **202**, the distributed version file servers **201**, the management server **30** could be uniformly called a terminal management system and compositely set on one piece of physical equipment.

Refer to FIG 3 which is a flow chart of a terminal downloading a file from distributed version servers and a host version file server to update in the case that a plurality of version file servers are disposed distributively in the present invention. In combination with FIGS 1 and 2, the updating flow comprises the following steps:
Step 301, the terminal **10** connects to the distributed version file servers **201** to acquire version updating information and then download an updating file to update;
Step 302, after the updating has been successfully performed, the terminal **10** connects to the management server **30** to report the result to the same;
Step 303, if the terminal **10** failed to connect to the distributed version file servers **201** to download updating, the terminal **10** will connect to the host version file server **202** to perform file downloading and updating;
Step 304, after the host version file server **202** has been successfully updated, the terminal **10** connects to the management server **30** to report the result to the same.

In the step 301 above, the flow of the terminal **10** connects to the distributed version file servers **201** to download and update comprises the steps 104, 105, 106 and 107 in the flow in FIG 1.

In the step 303 above, if the terminal **10** does not configure the host version file server **202** or there is only one version file server **20** in the system, the terminal **10** will quit from the updating flow and connected to the management server **30** to report the failure situation.

In FIG 3, when number of the terminals **10** managed in the system is very large, loading balance of the updating file downloading is achieved by disposing a plurality of version file servers **20** to meet the performance requirement of updating terminal version and configuration; the management server **30** maintains the file updating and synchronization of each version file server **20**, maintains the corresponding relation policy between the terminal **10** and the version file server **20**, and configures the version file server parameter and the host version file server parameter corresponding to the terminal **10**; as to the case where the number of the terminals **10** in the system is less and only one version file server **20** is disposed, the management server **30** will configure the version file server parameters of all the terminals **10** as the parameters of the server; the terminal **10** initiatively connect to the version file server **20** to acquire whether an updating is required and obtain the updating file parameter by the manner of downloading version updating description file; the terminal **10** connects to the version file server **20** to download updating file to update; when the terminal **10** fails to connect to the distributed version file servers **201** and download updating, the host version file server **202** could be selected to be connected to the terminal **10** to perform file downloading and updating; the management server **30** could trigger an automatic updating of the terminal **10** by an updating trigger command and force the terminal **10** to update by a compulsive updating command; and the software version updating and the configuration updating of the terminal **10** could be continuously performed, namely, the configuration file could be updated immediately after the software version updating is completed.

In the embodiments of the present invention, safety file downloading protocol is used in the version updating description file, the updating file downloading and the file synchronization of the version file server **20**; the version file server **20** only provides a minimum downloading authority to the terminal **10**, and meanwhile, limits the file and catalog that could be access by the terminal **10**; the terminal **10** performs decryption and some safety verification to the downloaded file to ensure legal source and the integrity of the file.

In the present invention, one or more version file servers could be disposed flexibly according to the number of the terminals; the management server configures the version file server parameter corresponding to the terminal; the terminal could initiatively enter into the updating flow and could be triggered by the management server as well; the terminal connects to the version file server to automatically determine whether an updating is required by the manner of downloading description file; when it is finally determined that an updating is required, the terminal connects to the version file server to download the updating file to update; the terminal will connect to the management server to report the updating result without considering whether the updating is successful or not.

The present invention provides a policy and method combining terminal software and configuration file updating, characterized by safety, reliability and high performance, which could ensure normal updating and downloading services even if the number of the terminals is large, and the management server could initiatively trigger and control the updating process of the terminal and ensure the file downloading and updating process security when it is necessary.

Under the management of the management system in the present invention, automatic file downloading from the concentrated or distributed version server, perform software or configuration updating are realized, and further support numerous terminal software updating in batches.

Of course, the present invention could have other various embodiments. According to the present invention, various corresponding modifications and changes may occur to those skilled in the art without departing from the scope of the invention, as defined by the appended claims, however, all the corresponding modifications and changes should fall within the scope of the appended claims in the present invention.

## Claims

1. An implementation method for updating terminals in batches, applicable to a terminal updating system including at least one terminal (10) and a management server (30), **characterized in that**, the terminal updating system further comprises at least one version file server (20), and the method comprises:
Step 1, the management server (30) synchronizing a description file and an updating file used in updating of the terminal (10) with the version file server (20);
Step 2, the respective terminal (10) connects to the management server (30), and the management server (30) configuring a corresponding version file server parameter for the respective terminal (10);
Step 3, the respective terminal (10) connects to a corresponding version file server (20) according to the corresponding version file server parameter to acquire version updating information; and
Step 4, the respective terminal (10) downloads an updating file for updating according to the version updating information, and informs the management server (30) of updating result.

2. The implementation method for updating the terminals in batches according to Claim 1, **characterized in that** in the step 2, the management server (30) configures the server parameter in automatic program manner or manual configuration manner.

3. The implementation method for updating the terminals in batches according to Claim 1, **characterized in that** in the step 2, the management server (30) configures a version file server parameter corresponding to the respective terminal (10) according to a corresponding relation policy between the respective terminal (10) and the version file servers (20); and the corresponding relation policy is:
if the terminal updating system disposes one version file server (20), the respective terminal (10) will correspond to the version file server (20); if the terminal updating system disposes a plurality of version file servers (201, 202), one version file server therein will be taken as a host version file server (202), the others will be taken as distributed version file servers (201), and version file servers (20) corresponding to the respective terminal (10) will be allocated equally according to a policy.

4. The implementation method for updating the terminals in batches according to Claim 1, 2 or 3, **characterized in that** the step 2 further comprises the following step:
after the server parameter configuration is completed, the management server (30) triggers an autonomous updating of the respective terminal (10) by an updating trigger command or telecom business operation support system informs the respective terminal (10) and the management server (30) of an trigger-updating by a generated worksheet.

5. The implementation method for updating the terminals in batches according to Claim 4, **characterized in that** Step 2 further comprises a step of determining whether the respective terminal (10) has a graphic interface; if the respective terminal has a graphic interface, and an user receives an updating trigger command when using terminal service, the user will be prompted by the graphic interface whether to update; when the user agrees to update, connect to the version file server (20) to update, otherwise, do not update and return a reason of updating termination to the management server (30); if the respective terminal (10) has no graphic interface, and the user receives the updating trigger command when using the terminal service, do not update and return a reason of updating termination to the management server (30).

6. The implementation method for updating the terminals in batches according to Claim 1, 2 or 3, **characterized in that** after the server parameter configuration is completed, the step 2 further comprises the following step:
after the server parameter configuration is completed, the management server (30) updates the respective terminal (10) compulsively by a compulsive updating command, or telecom business operation support system informs the respective terminal (10) and the management server of an trigger-updating by a generated worksheet.

7. The implementation method for updating the terminals in batches according to Claim 6, **characterized in that** the step 2 further comprises a step of determining whether the respective terminal (10) has a graphic interface; if the respective terminal (10) has a graphic interface, and an user receives a compulsive updating command when using terminal service, the user will be prompted by the graphic interface whether to update; when the user agrees to update, connect to the version file server (20) to update, otherwise, do not update and return a reason of updating termination to the management server; if the respective terminal (10) has no graphic interface, and the user receives the compulsive updating command when using the terminal service, do not update and return a reason of updating termination to the management server.

8. The implementation method for updating the terminals in batches according to Claim 1, 2, 3, 5 or 7, **characterized in that** in the steps 3 and 4, the respective terminal (10) will not be updated in the case of the user is using a service and cannot be interrupted; the terminal (10) will be updated in the case of the terminal (10) is not in use and a terminal updating will not affect a service in use.

9. The implementation method for updating the terminals in batches according to Claim 1, 2, 3, 5 or 7, **characterized in that** in the steps 3 and 4, if the respective terminal (10) acquires the version updating information by downloading and analyzing the description file, the respective terminal (10) will download the description file according to security file transfer protocol or file transfer protocol; the description file is a security-encrypted file and the decryption key of the description file is configured by the management server (30) when configuring the server parameter.

10. The implementation method for updating the terminals in batches according to Claim 1, 2, 3, 5 or 7, **characterized in that** in the step 3, when restarted or at a fixed time interval, the respective terminal (10) initiatively connects to the version file server (20) and downloads the description file when triggered by the management server (30).

11. The implementation method for updating the terminals in batches according to Claim 1, 2, 3, 5 or 7, **characterized in that** the step 3 further comprises a step of decrypting, checking and verifying the description file by the respective terminal if the respective terminal (10) acquires the version updating information by downloading and analyzing the description file; if the description file is successfully decrypted, checked and verified, the respective terminal will analyze contents of the description file, otherwise, the respective terminal (10) will quit from the updating flow and connect to the management server (30) to report failure of updating to the same.

12. The implementation method for updating the terminals in batches according to Claim 11, **characterized in that** the step 3 further comprises the following step in the case of the checking of the description file by the respective terminal (10) is successful: the respective terminal (10) determining whether updating is required, the modules to be updated, path parameters and file size parameters of an updating file according to the version updating information and version condition corresponding to the respective terminal (10).

13. An implementation method according to claim 1 for updating the terminals in batches, applicable to a system including at least one terminal (10) and one terminal management system (30) including one or more version file server (20), **characterized in that** the method comprises:
Step 1, the terminal management system (30) informing a terminal (10) to update by a compulsive updating command;
Step 2, the terminal (10) connects to a specified version file server (20) to download an updating file after the terminal (10) receives the compulsive updating command;
Step 3, the terminal (10) performs decrypting, checking and verifying to the updating file after the download is completed and performing updating after the updating file is successfully verified; and
Step 4, the terminal (10) connects to the terminal management system to report updating result to the same after the updating is completed.

14. A computer program product for updating the terminals in batches, which computer program product comprises instructions for causing a processor to perform the steps of a method, applicable to a terminal updating system including at least one terminal (10),a management server (30), and at least one version file server (20), the method comprising the steps of:
Step 1, the management server (30) synchronizing a description file and an updating file used in updating of the terminal (10) with the version file server (20);
Step 2, the respective terminal (10) connects to the management server (30), and the management server (30) configuring a corresponding version file server parameter for the respective terminal (10);
Step 3, the respective terminal (10) connects to a corresponding version file server (20) according to the corresponding version file server parameter to acquire version updating information; and
Step 4, the respective terminal (10) downloads an updating file for updating according to the version updating information, and informs the management server (30) of updating result.

15. A terminal updating system comprises at least one terminal (10) and a management server (30), and at least one version file server (20), wherein the system is arranged for:
Step 1, the management server (30) synchronizing a description file and an updating file used in updating of the terminal (10) with the version file serve (20);
Step 2, the respective terminal (10) connects to the management server (30), and the management server (30) configuring a corresponding version file server parameter for the respective terminal (10);
Step 3, the respective terminal (10) connects to a corresponding version file server (20) according to the corresponding version file server parameter to acquire version updating information; and
Step 4, the respective terminal (10) downloads an updating file for updating according to the version updating information, and informs the management server (30) of updating result.

## Patentansprüche

1. Implementierungsverfahren zur schubweisen Aktualisierung von Datenendgeräten, anwendbar auf ein Datenendgerät-Aktualisierungssystem mit mindestens einem Datenendgerät (10) und einem Managementserver (30), **dadurch gekennzeichnet, dass** das Datenendgerät-Aktualisierungssystem ferner mindestens einen Versionsdateiserver (20) umfasst und das Verfahren folgende Schritte umfasst:
Schritt 1, in dem der Managementserver (30) eine Beschreibungsdatei und eine Aktualisierungsdatei, verwendet bei der Aktualisierung des Datenendgeräts (30) mit dem Versionsdateiserver (20) synchronisiert;
Schritt 2, in dem das jeweilige Datenendgerät (10) eine Verbindung zum Managementserver (30) herstellt und der Managementserver (30) einen entsprechenden Versionsdateiserverparameter für das jeweilige Endgerät (10) konfiguriert;
Schritt 3, in dem das jeweilige Datenendgerät (10) eine Verbindung zu einem entsprechenden Versionsdateiserver (20) gemäß dem entsprechenden Versionsdateiserverparameter herstellt, um Versionsaktualisierungsinformation zu erhalten; und
Schritt 4, in dem das jeweilige Datenendgerät (10) eine Aktualisierungsdatei zur Aktualisierung gemäß der Versionsaktualisierungsinformation herunterlädt und den Managementserver (30) über das Aktualisierungsergebnis informiert.

2. Implementierungsverfahren zur schubweisen Aktualisierung der Datenendgeräte nach Anspruch 1, **dadurch gekennzeichnet, dass** in Schritt 2 der Managementserver (30) den Serverparameter in automatischer Programmweise oder manueller Konfigurationsweise konfiguriert.

3. Implementierungsverfahren zur schubweisen Aktualisierung der Datenendgeräte nach Anspruch 1, **dadurch gekennzeichnet, dass** in Schritt 2 der Managementserver (30) einen Versionsdateiserverparameter entsprechend dem jeweiligen Datenendgerät (10) gemäß einem entsprechenden Beziehungsgrundsatz zwischen dem jeweiligen Datenendgerät (10) und den Versionsdateiservern (20) konfiguriert; und der entsprechende Beziehungsgrundsatz lautet:
Wenn das Datenendgerät-Aktualisierungssystem über einen Versionsdateiserver (20) verfügt, entspricht das jeweilige Datenendgerät (10) dem Versionsdateiserver (20); wenn das Datenendgerät-Aktualisierungssystem über mehrere Versionsdateiserver (201, 202) verfügt, dient ein Versionsdateiserver darin als Host-Versionsdateiserver (202), die anderen dienen als dezentralisierte Versionsdateiserver (201), und Versionsdateiserver (20) entsprechend dem jeweiligen Datenendgerät (10) werden gleichmäßig gemäß einem Grundsatz zugewiesen.

4. Implementierungsverfahren zur schubweisen Aktualisierung der Datenendgeräte nach Anspruch 1, 2 oder 3, **dadurch gekennzeichnet, dass** Schritt 2 ferner den folgenden Schritt umfasst:
Nachdem die Serverparameterkonfiguration abgeschlossen ist, löst der Managementserver (30) eine autonome Aktualisierung des jeweiligen Endgeräts (10) durch einen Aktualisierungsauslösebefehl aus, oder das Telecom-Geschäftsbetriebssupportsystem informiert das jeweilige Datenendgerät (10) und den Managementserver (30) von einer Auslöseaktualisierung durch ein generiertes Arbeitsblatt.

5. Implementierungsverfahren zur schubweisen Aktualisierung der Terminals nach Anspruch 4, **dadurch gekennzeichnet, dass** Schritt 2 ferner einen Schritt umfasst, in dem bestimmt wird, ob das jeweilige Datenendgerät (10) über eine Grafikschnittstelle verfügt; wenn das jeweilige Datenendgerät über eine Grafikschnittstelle verfügt und ein Nutzer, der den Datenendgerätservice nutzt, einen Aktualisierungsauslösebefehl empfängt, wird der Nutzer durch die Grafikschnittstelle gefragt, ob aktualisiert werden soll; ist der Nutzer mit der Aktualisierung einverstanden, wird eine Verbindung zum Versionsdateiserver (20) zur Aktualisierung hergestellt, andernfalls wird nicht aktualisiert, und an den Managementserver (30) wird ein Grund für die Beendigung der Aktualisierung übergeben; wenn das jeweilige Datenendgerät (10) nicht über eine Grafikschnittstelle verfügt und der Nutzer bei Verwendung des Datenendgerätservice den Aktualisierungsauslösebefehl empfängt, wird nicht aktualisiert und ein Grund für die Beendigung der Aktualisierung wird an den Managementserver (30) übergeben.

6. Implementierungsverfahren zur schubweisen Aktualisierung der Datenendgeräte nach Anspruch 1, 2 oder 3, **dadurch gekennzeichnet, dass**, nachdem die Serverparameterkonfiguration abgeschlossen ist, Schritt 2 ferner folgenden Schritt umfasst:
Nachdem die Serverparameterkonfiguration abgeschlossen ist, aktualisiert der Managementserver (30) obligatorisch das jeweilige Datenendgerät (10) durch einen obligatorischen Aktualisierungsbefehl, oder das Telecom-Geschäftsbetriebssupportsystem informiert das jeweilige Datenendgerät (10) und den Managementserver von einer Auslöseaktualisierung durch ein generiertes Arbeitsblatt.

7. Implementierungsverfahren zur schubweisen Aktualisierung der Datenendgeräte nach Anspruch 6, **dadurch gekennzeichnet, dass** Schritt 2 ferner einen Schritt umfasst, in dem bestimmt wird, ob das jeweilige Datenendgerät (10) über eine Grafikschnittstelle verfügt; wenn das jeweilige Datenendgerät über eine Grafikschnittstelle verfügt und ein Nutzer, der den Datenendgerätservice nutzt, einen obligatorischen Aktualisierungsbefehl empfängt, wird der Nutzer durch die Grafikschnittstelle gefragt, ob aktualisiert werden soll; ist der Nutzer mit der Aktualisierung einverstanden, wird eine Verbindung zum Versionsdateiserver (20) zur Aktualisierung hergestellt, andernfalls wird nicht aktualisiert, und an den Managementserver (30) wird ein Grund für die Beendigung der Aktualisierung übergeben; wenn das jeweilige Datenendgerät (10) nicht über eine Grafikschnittstelle verfügt und der Nutzer bei Verwendung des Datenendgerätservice den Aktualisierungsauslösebefehl empfängt, wird nicht aktualisiert und ein Grund für die Beendigung der Aktualisierung wird an den Managementserver (30) übergeben.

8. Implementierungsverfahren zur schubweisen Aktualisierung der Datenendgeräte nach Anspruch 1, 2, 3, 5 oder 7, **dadurch gekennzeichnet, dass** in den Schritten 3 und 4 das jeweilige Datenendgerät (10) nicht aktualisiert wird, wenn der Nutzer einen Service nutzt und nicht unterbrochen werden darf; das Datenendgerät (10) wird aktualisiert, wenn das Datenendgerät (10) nicht genutzt wird und eine Datenendgerätaktualisierung keinen genutzten Service beeinträchtigt.

9. Implementierungsverfahren zur schubweisen Aktualisierung der Datenendgeräte nach Anspruch 1, 2, 3, 5 oder 7, **dadurch gekennzeichnet, dass** in den Schritten 3 und 4, wenn das jeweilige Datenendgerät (10) die Versionsaktualisierungsinformation durch Herunterladen und Analysieren der Beschreibungsdatei bezieht, das jeweilige Datenendgerät (10) die Beschreibungsdatei gemäß dem Sicherheitsdateitransferprotokoll oder dem Dateitransferprotokoll herunterladen wird; wobei die Beschreibungsdatei eine sicherheitsverschlüsselte Datei ist, und der Entschlüsselungsschlüssel der Beschreibungsdatei bei der Konfiguration des Serverparameters vom Managementserver (30) konfiguriert wird.

10. Implementierungsverfahren zur schubweisen Aktualisierung der Datenendgeräte nach Anspruch 1, 2, 3, 5 oder 7, **dadurch gekennzeichnet, dass** in Schritt 3 bei einem Neustart oder in einem festgelegten Zeitintervall das jeweilige Datenendgerät (10) anfänglich eine Verbindung zum Versionsdateiserver (20) herstellt und die Beschreibungsdatei herunterlädt, wenn dies durch den Managementserver (30) ausgelöst wurde.

11. Implementierungsverfahren zur schubweisen Aktualisierung der Datenendgeräte nach Anspruch 1, 2, 3, 5 oder 7, **dadurch gekennzeichnet, dass** Schritt 3 ferner einen Schritt umfasst, in dem die Beschreibungsdatei durch das jeweilige Datenendgerät entschlüsselt, geprüft und verifiziert wird, wenn das jeweilige Datenendgerät (10) die Versionsaktualisierungsinformation durch Herunterladen und Analysieren der Beschreibungsdatei erwirbt; wenn die Beschreibungsdatei erfolgreich entschlüsselt, geprüft und verifiziert ist, analysiert das jeweilige Datenendgerät den Inhalt der Beschreibungsdatei, andernfalls verlässt das jeweilige Datenendgerät (10) den Aktualisierungsfluss und stellt eine Verbindung zum Managementserver (30) her, um diesem das Scheitern der Aktualisierung zu melden.

12. Implementierungsverfahren zur schubweisen Aktualisierung der Datenendgeräte nach Anspruch 11, **dadurch gekennzeichnet, dass** Schritt 3 ferner den folgenden Schritt umfasst, wenn die Prüfung der Beschreibungsdatei durch das jeweilige Datenendgerät (10) erfolgreich ist: das jeweilige Datenendgerät (10) ermittelt, ob eine Aktualisierung erforderlich ist, die zu aktualisierenden Module, Pfadparameter und Dateigrößenparameter einer Aktualisierungsdatei gemäß der Versionsaktualisierungsinformation und dem Versionszustand entsprechend dem jeweiligen Datenendgerät (10).

13. Implementierungsverfahren nach Anspruch 1 zur schubweisen Aktualisierung der Datenendgeräte, anwendbar auf ein System mit mindestens einem Datenendgerät (10) und einem Datenendgerätmanagementsystem (30) mit einem oder mehreren Versionsdateiservern (20), **dadurch gekennzeichnet, dass** das Verfahren folgende Schritte umfasst:
Schritt 1, in dem das Datenendgerätmanagementsystem (30) ein Datenendgerät (10) informiert zu aktualisieren durch einen obligatorischen Aktualisierungsbefehl;
Schritt 2, in dem das Datenendgerät (10) eine Verbindung zu einem angegebenen Versionsdateiserver (20) herstellt, um eine Aktualisierungsdatei herunterzuladen, nachdem das Datenendgerät (10) den obligatorischen Aktualisierungsbefehl empfängt;
Schritt 3, in dem das Datenendgerät (10) die Entschlüsselung, Prüfung und Verifizierung der Aktualisierungsdatei durchführt nachdem das Herunterladen abgeschlossen ist, und die Aktualisierung durchführt, nachdem die Aktualisierungsdatei erfolgreich verifiziert wurde; und
Schritt 4, in dem das Datenendgerät (10) eine Verbindung zum Datenendgerätmanagementsystem herstellt, um diesem das Aktualisierungsergebnis zu melden, nachdem die Aktualisierung abgeschlossen ist.

14. Computerprogrammprodukt zur schubweisen Aktualisierung der Terminals, umfassend Anweisungen, um einen Prozessor zu veranlassen, die Schritte eines Verfahrens, anwendbar auf ein Datenendgerätaktualisierungssystem mit mindestens einem Datenendgerät (10), einem Managementserver (30) und mindestens einem Versionsdateiserver (20), durchzuführen, wobei das Verfahren folgende Schritte umfasst:
Schritt 1, in dem der Managementserver (30) eine Beschreibungsdatei und eine Aktualisierungsdatei, verwendet bei der Aktualisierung des Datenendgeräts (10), mit dem Versionsdateiserver (20) synchronisiert;
Schritt 2, in dem das jeweilige Datenendgerät (10) eine Verbindung zum Managementserver (30) herstellt und der Managementserver (30) einen entsprechenden Versionsdateiserverparameter für das jeweilige Datenendgerät (10) konfiguriert;
Schritt 3, in dem das jeweilige Datenendgerät (10) eine Verbindung zu einem entsprechenden Versionsdateiserver (20) gemäß dem entsprechenden Versionsdateiserverparameter herstellt, um Versionsaktualisierungsinformation zu beziehen; und
Schritt 4, in dem das jeweilige Datenendgerät (10) eine Aktualisierungsdatei für die Aktualisierung gemäß der Versionsaktualisierungsinformation herstellt und den Managementserver (30) über das Aktualisierungsergebnis informiert.

15. Datenendgerätaktualisierungssystem, umfassend mindestens ein Datenendgerät (10) und einen Managementserver (30) und mindestens einen Versionsdateiserver (20), wobei das System angeordnet ist für:
Schritt 1, in dem der Managementserver (30) eine Beschreibungsdatei und eine Aktualisierungsdatei, verwendet für die Aktualisierung des Datenendgeräts (10), mit dem Versionsdateiserver (20) synchronisiert;
Schritt 2, in dem das jeweilige Datenendgerät (10) eine Verbindung zum Managementserver (30) herstellt und der Managementserver (30) einen entsprechenden Versionsdateiserverparameter für das jeweilige Datenendgerät (10) konfiguriert;
Schritt 3, in dem das jeweilige Datenendgerät (10) eine Verbindung zu einem entsprechenden Versionsdateiserver (20) gemäß dem entsprechenden Versionsdateiserverparameter herstellt, um die Versionsaktualisierungsinformation zu beziehen; und
Schritt 4, in dem das jeweilige Datenendgerät (10) eine Aktualisierungsdatei zur Aktualisierung gemäß der Versionsaktualisierungsinformation herunterlädt und den Managementserver (30) über das Aktualisierungsergebnis informiert.

## Revendications

1. Procédé de mise en oeuvre pour mettre à jour des terminaux par lots, applicable à un système de mise à jour de terminal comprenant au moins un terminal (10) et un serveur de gestion (30), **caractérisé en ce que**, le système de mise à jour de terminal comprend en outre au moins un serveur de fichiers de version (20), et le procédé comprend :
Etape 1, le serveur de gestion (30) synchronisant un fichier de description et un fichier de mise à jour utilisés dans la mise à jour du terminal (10) avec le serveur de fichiers de version (20) ;
Etape 2, le terminal respectif (10) se connecte au serveur de gestion (30), et le serveur de gestion (30) configurant un paramètre de serveur de fichiers de version correspondant pour le terminal respectif (10) ;
Etape 3, le terminal respectif (10) se connecte à un serveur de fichiers de version correspondant (20) selon le paramètre de serveur de fichiers de version correspondant pour acquérir des informations de mise à jour de version ; et
Etape 4, le terminal respectif (10) télécharge un fichier de mise à jour pour mettre à jour selon les informations de mise à jour de version, et informe le serveur de gestion (30) du résultat de mise à jour.

2. Procédé de mise en oeuvre pour mettre à jour les terminaux par lots selon la revendication 1, **caractérisé en ce qu'**à l'étape 2, le serveur de gestion (30) configure le paramètre de serveur d'une manière de programme automatique ou d'une manière de configuration manuelle.

3. Procédé de mise en oeuvre pour mettre à jour les terminaux par lots selon la revendication 1, **caractérisé en ce qu'**à l'étape 2, le serveur de gestion (30) configure un paramètre de serveur de fichiers de version correspondant au terminal respectif (10) selon une politique de relation correspondante entre le terminal respectif (10) et les serveurs de fichiers de version (20) ; et la politique de relation correspondante est :
si le système de mise à jour de terminal dispose d'un serveur de fichiers de version (20), le terminal respectif (10) correspondra au serveur de fichiers de version (20) ; si le système de mise à jour de terminal dispose d'une pluralité de serveurs de fichiers de version (201, 202), un serveur de fichiers de version dans ceux-ci sera pris comme un serveur de fichiers de version hôte (202), les autres seront pris comme des serveurs de fichiers de version distribués (201), et des serveurs de fichiers de version (20) correspondant au terminal respectif (10) seront alloués de la même manière selon une politique.

4. Procédé de mise en oeuvre pour mettre à jour les terminaux par lots selon la revendication 1, 2 ou 3, **caractérisé en ce que** l'étape 2 comprend en outre l'étape suivante :
après que la configuration de paramètre de serveur est achevée, le serveur de gestion (30) déclenche une mise à jour autonome du terminal respectif (10) par une commande de déclenchement de mise à jour ou un système de support d'opérations d'affaires télécoms informe le terminal respectif (10) et le serveur de gestion (30) d'une mise à jour par déclenchement par une feuille de travail générée.

5. Procédé de mise en oeuvre pour mettre à jour les terminaux par lots selon la revendication 4, **caractérisé en ce que** l'étape 2 comprend en outre une étape consistant à déterminer si le terminal respectif (10) a une interface graphique ; si le terminal respectif a une interface graphique, et qu'un utilisateur reçoit une commande de déclenchement de mise à jour lors de l'utilisation d'un service de terminal, l'utilisateur sera invité par l'interface graphique à mettre à jour ; lorsque l'utilisateur accepte de mettre à jour, il se connecte au serveur de fichiers de version (20) pour mettre à jour, sinon, ne met pas à jour et retourne une raison de terminaison de mise à jour au serveur de gestion (30) ; si le terminal respectif (10) n'a pas d'interface graphique, et que l'utilisateur reçoit la commande de déclenchement de mise à jour lors de l'utilisation du service de terminal, ne met pas à jour et retourne une raison de terminaison de mise à jour au serveur de gestion (30).

6. Procédé de mise en oeuvre pour mettre à jour les terminaux par lots selon la revendication 1, 2 ou 3, **caractérisé en ce qu'**après que la configuration de paramètre de serveur est achevée, l'étape 2 comprend en outre l'étape suivante :
après que la configuration de paramètre de serveur est achevée, le serveur de gestion (30) met à jour le terminal respectif (10) compulsivement par une commande de mise à jour compulsive, ou le système de support d'opérations d'affaires télécoms informe le terminal respectif (10) et le serveur de gestion d'une mise à jour par déclenchement par une feuille de travail générée.

7. Procédé de mise en oeuvre pour mettre à jour les terminaux par lots selon la revendication 6, **caractérisé en ce que** l'étape 2 comprend en outre une étape consistant à déterminer si le terminal respectif (10) a une interface graphique ; si le terminal respectif (10) a une interface graphique, et qu'un utilisateur reçoit une commande de mise à jour compulsive lors de l'utilisation d'un service de terminal, l'utilisateur sera invité par l'interface graphique à mettre à jour ; lorsque l'utilisateur accepte de mettre à jour, il se connecte au serveur de fichiers de version (20) pour mettre à jour, sinon, ne met pas à jour et retourne une raison de terminaison de mise à jour au serveur de gestion ; si le terminal respectif (10) n'a pas d'interface graphique, et que l'utilisateur reçoit la commande de mise à jour compulsive lors de l'utilisation du service de terminal, ne met pas à jour et retourne une raison de terminaison de mise à jour au serveur de gestion.

8. Procédé de mise en oeuvre pour mettre à jour les terminaux par lots selon la revendication 1, 2, 3, 5 ou 7, **caractérisé en ce qu'**aux étapes 3 et 4, le terminal respectif (10) ne sera pas mis à jour dans le cas où l'utilisateur utilise un service et ne peut pas être interrompu ; le terminal (10) sera mis à jour dans le cas où le terminal (10) n'est pas utilisé et une mise à jour de terminal n'affectera pas un service en cours d'utilisation.

9. Procédé de mise en oeuvre pour mettre à jour les terminaux par lots selon la revendication 1, 2, 3, 5 ou 7, **caractérisé en ce qu'**aux étapes 3 et 4, si le terminal respectif (10) acquiert les informations de mise à jour de version en téléchargeant et en analysant le fichier de description, le terminal respectif (10) téléchargera le fichier de description selon un protocole de transfert de fichier de sécurité ou un protocole de transfert de fichier ; le fichier de description est un fichier chiffré de sécurité et la clé de déchiffrement du fichier de description est configurée par le serveur de gestion (30) lors de la configuration du paramètre de serveur.

10. Procédé de mise en oeuvre pour mettre à jour les terminaux par lots selon la revendication 1, 2, 3, 5 ou 7, **caractérisé en ce qu'**à l'étape 3, lorsqu'il est redémarré ou à un intervalle de temps fixe, le terminal respectif (10) se connecte initiativement au serveur de fichiers de version (20) et télécharge le fichier de description lorsque déclenché par le serveur de gestion (30).

11. Procédé de mise en oeuvre pour mettre à jour les terminaux par lots selon la revendication 1, 2, 3, 5 ou 7, **caractérisé en ce que** l'étape 3 comprend en outre une étape consistant à déchiffrer, contrôler et vérifier le fichier de description par le terminal respectif si le terminal respectif (10) acquiert les informations de mise à jour de version en téléchargeant et en analysant le fichier de description ; si le fichier de description est déchiffré, contrôlé et vérifié avec succès, le terminal respectif analysera le contenu du fichier de description, sinon, le terminal respectif (10) sortira du flux de mise à jour et se connectera au serveur de gestion (30) pour rapporter l'échec de la mise à jour à celui-ci.

12. Procédé de mise en oeuvre pour mettre à jour les terminaux par lots selon la revendication 11, **caractérisé en ce que** l'étape 3 comprend en outre l'étape suivante dans le cas où le contrôle du fichier de description par le terminal respectif (10) est réussi : le terminal respectif (10) déterminant si une mise à jour est requise, les modules à mettre à jour, les paramètres de chemin, et les paramètres de taille de fichier d'un fichier de mise à jour selon les informations de mise à jour de version et la condition de version correspondant au terminal respectif (10).

13. Procédé de mise en oeuvre selon la revendication 1 pour mettre à jour les terminaux par lots, applicable à un système comprenant au moins un terminal (10) et un système gestion de terminal (30) comprenant un ou plusieurs serveurs de fichiers de version (20), **caractérisé en ce que** le procédé comprend :
Etape 1, le système de gestion de terminal (30) informant un terminal (10) de se mettre à jour par une commande de mise à jour compulsive ;
Etape 2, le terminal (10) se connecte à un serveur de fichiers de version spécifié (20) pour télécharger un fichier de mise à jour après que le terminal (10) a reçu la commande de mise à jour compulsive ;
Etape 3, le terminal respectif (10) effectue un déchiffrement, un contrôle et une vérification sur le fichier de mise à jour après que le téléchargement est achevé et effectuant la mise à jour après que le fichier de mise à jour est vérifié avec succès ; et
Etape 4, le terminal (10) se connecte au système de gestion de terminal pour rapporter le résultat de mise à jour à celui-ci après que la mise à jour est achevée.

14. Produit de programme informatique pour mettre à jour les terminaux par lots, lequel produit de programme informatique comprend des instructions pour amener un processeur à effectuer les étapes d'un procédé, applicable à un système de mise à jour de terminal comprenant au moins un terminal (10), un serveur de gestion (30), et au moins un serveur de fichiers de version (20), le procédé comprenant les étapes suivantes :
Etape 1, le serveur de gestion (30) synchronisant un fichier de description et un fichier de mise à jour utilisés dans la mise à jour du terminal (10) avec le serveur de fichiers de version (20) ;
Etape 2, le terminal respectif (10) se connecte au serveur de gestion (30), et le serveur de gestion (30) configurant un paramètre de serveur de fichiers de version correspondant pour le terminal respectif (10) ;
Etape 3, le terminal respectif (10) se connecte à un serveur de fichiers de version correspondant (20) selon le paramètre de serveur de fichiers de version correspondant pour acquérir des informations de mise à jour de version ; et
Etape 4, le terminal respectif (10) télécharge un fichier de mise à jour pour mettre à jour selon les informations de mise à jour de version, et informe le serveur de gestion (30) du résultat de mise à jour.

15. Système de mise à jour de terminal comprenant au moins un terminal (10) et un serveur de gestion (30), et au moins un serveur de fichiers de version (20), dans lequel le système est agencé pour :
Etape 1, le serveur de gestion (30) synchronisant un fichier de description et un fichier de mise à jour utilisés dans la mise à jour du terminal (10) avec le serveur de fichiers de version (20) ;
Etape 2, le terminal respectif (10) se connecte au serveur de gestion (30), et le serveur de gestion (30) configurant un paramètre de serveur de fichiers de version correspondant pour le terminal respectif (10) ;
Etape 3, le terminal respectif (10) se connecte à un serveur de fichiers de version correspondant (20) selon le paramètre de serveur de fichiers de version correspondant pour acquérir des informations de mise à jour de version ; et
Etape 4, le terminal respectif (10) télécharge un fichier de mise à jour pour mettre à jour selon les informations de mise à jour de version, et informe le serveur de gestion (30) du résultat de mise à jour.
